# EUROPEAN PATENT APPLICATION

(11) **EP 3 459 910 A1**
(43) Date of publication of application: **27.03.2019**
(21) Application number: 17781970.3
(22) Date of filing: 12.04.2017
(51) Int. Cl.: C02F 1/463, C02F 9/06, C02F 103/20

(54) **SLURRY PROCESSING METHOD AND PLANT**

(30) Priority: 12.04.2016 ES 201600326
(71) Applicant: Instrumentos Financieros Y Económicos Sociedad Limitada, 50006 Zaragoza (ES)
(72) Inventor: ZARRALANGA PETRIZ, José Luis, 50006 Zaragoza (ES); TOBARUELA DELGADO, Ignacio, 50006 Zaragoza (ES)
(74) Representative: López Martínez, José Antonio
(86) International application number: PCT/ES2017/000043
(87) International publication number: WO 2017/178671

(57) **Abstract**

The present invention concerns a method for treatment of slurry comprising three successive stages of filtering and separating solid particles, being the last one electrocoagulation stage, and subsequent pelletization of the solid fraction obtained mixed with lignocellulosic or lignocellulosic materials, the intermediate filtering and separation stage being a physical-chemical separation stage by means of a coagulant and flocculant supply, in aqueous dispersion and by a subsequent separation of an ultra-fine solid fraction by means of an equipment of centrifugation.

## Description

### Field of technique

The invention comes within part of the technical sector of the treatment of animal slurries, in particular porcine slurry, for the recovery of waste from farms in the agro-livestock industry, by eliminating a significant proportion of nitrogen compounds, elimination of greenhouse gases (C02, CH4), and elimination of other pollutants in the form of gas (NH3, NH4, NOx) causing odours and the use of the resulting waste in the form of biomass gas.

The invention also refers to a plant for treatment of porcine slurry, where said treatment procedure is implemented.

### State of the technique

Various antecedents are known that propose to use pig manure as organic fertilizer, together with purified water for various purposes, which is a benefit for farmers and agricultural lands. However, there is a problem in the so-called areas of high concentration of pig farms, where there is not enough nearby agricultural area for an adequate recovery of pig manure as fertilizer.

Oxidation techniques (electro-oxidation, ozone, hydrogen peroxide or electro-oxidation)
deionization with appreciable energy consumption) are applied to reduce the pollution load of the liquid agro-livestock waste; or evaporation, with which part of the dissolved gases escapes into the atmosphere without control, maintaining important emission levels if additional recovery systems are not included.

From US 7156999 (82) there is known a method for treating animal slurry comprising a step of subjecting at least a part of the slurry to a first stage of biological passive flotation in a flotation unit, with a residence time comprised between 4 and approximately 24 hours, with the presence of a polymer, to yield a first solid fraction and a first liquid fraction of flotation and perform a further treatment step selected from a group comprising subjecting the slurry to a stage of separation of coarse solid particles greater than 0.05 mm before performing a first flotation to provide a liquid fraction that is part of said slurry, and subjecting said liquid fraction to a later separation step solid-liquid that provides a final liquid fraction.

The patent ES 2395664 (81) describes a system for removing impurities from slurry generated in swine farms, comprising a separation of solids-liquids in a filter press after whose operation the liquid fraction is sent to a flotation-flocculation tank from which the resulting liquid matter is passed by an electrocoagulation equipment for the separation of the floating sludge from the precipitated sludge and the treated effluent goes on to a process where caustic soda is added to increase the PG, to pass to an electro-oxidation stage. Said electro-oxidation is complemented by a phase of zeolite-active carbon filtration and a reverse osmosis to separate the salts and other impurities from the liquid obtaining a treated and clean water. On the other hand, the solid phases resulting from the different stages are used to convert them into a fertilizer for the land. This request does not deal with the elimination of emissions in the form of C02 from the mechanization of the existing carbon in the solid fraction used, as organic fertilizer and the emission of NOx by nitrogen compounds existing both in the solid fraction and in the liquid that is used as irrigation water enriched in said nitrogen compounds.

WO 20006134453 (A1) describes the production of a fertilizer from the treatment of slurry by electrolysis and with ozone injection. This treatment does not avoid the methanisation of the organic fraction of the slurry and therefore does not reduce the emission of C02 associated with said mechanization. The same happens with the nitrogenous fraction present in the obtained fertilizer, since the treatment does not reduce the emission of nitrogen-based GEi generated during the treatment or after its deposition on an agricultural surface.

Patent ES 2292310 (81) describes a system for the treatment of effluents by electrocoagulation.

The patent ES 2473440 (81) refers to a manure treatment process which comprises all the stages included in the preamble of claim 1 of this patent application, using an electrocoagulation equipment as described in the previous patent ES 2292310 (81). In this procedure the final liquid fraction remains with a very low content of nitrogen compounds generators or precursors of GEi, and of rests of dissolved organic matter, phosphorus and other inorganic contaminants such as heavy metals, etc., and especially also of organic contaminants, such as microbial or fungal flora and fauna, remains of medication and organic matter in general, getting an effluent treated with a highly reduced and low impact pollutant load environmental. On the other hand, the solids and sludge decanted or supernatants of the process are sent to pelletize to obtain fuel biomass or, if its humidity is excessive to a solid-liquid separator for later to go to pelletization.

The present invention supposes an improvement of the procedure described in this last patent, which is achieved by the realization of an additional ultrafine filtering phase, guaranteeing that the effluent reaching the electrocoagulation equipment has a particle size below 20 microns, that is, the number of nonconductive solid particles present in the electrocoagular effluent is reduced, in addition of behaving a system of continuous execution of the process under a control computerized.

### BRIEF DESCRIPTION OF THE INVENTION

The present invention concerns a method for the treatment of animal slurry, especially porcine slurry. It will be understood here that the slurry is a waste that contains feces, urine and water from the washing of the pigsties and that can include remains of food, vegetable remains, seeds, etc.

The proposed method comprises the following steps, which are known per se in this sector of the art, in particular because they have been implemented in the aforementioned patent ES 2473440 (81):
a)solid-liquid physical separation of a liquid effluent from a deposit with agitation, which contains slurry, generated a first solid fraction and a first filtered liquid fraction;
b)physical-chemical separation of the first liquid fraction obtained in stage a) providing a second solid fraction and a second liquid fraction;
c)electrocoagulation of the second liquid fraction obtained in step b) providing a third solid fraction and a third liquid fraction;
d)pelleting of the solid fractions obtained at least in steps a) and b) in the presence of lignocellulosic or lignocellulosic materials,

Thus, successive separation and filtering steps allow to extract said first, second and third solid fractions from the initial liquid effluent, leaving a third filtered liquid fraction free of said solid fractions as a final result of the before described process.

In a creative way, the present method further proposes that said stage b) of physical-chemical separation comprises:
- controlled dosage and delivery of a coagulant to said first liquid fraction;
- controlled dosage and supply of a flocculant, in aqueous dispersion to said first liquid fraction, downstream of the coagulant contribution point;
- the treatment of said first liquid fraction, dosed with coagulant and flocculants, in equipment that provides a second ultra-fine filtration (particle size less than 20 microns) by separating an ultra-fine solid fraction from a second liquid fraction .

In a preferred embodiment said second ultra-fine filtering will be carried out by means of a worm spinning equipment which pushes the solid fraction towards a
end while a drum with micro-holes rotates at high speed (rotation rate of the order of 4,500 revolutions / minute) evacuating a liquid phase by centrifugal force.

These improvements in stage b) allow the elimination of a second ultra-fine solid fraction, leaving a second liquid fraction much better filtered, which affects the performance of the electrocoagulation stage favouring, by avoiding that the sacrificial anodes used (of Al or Fe) receive an excessive load of particles affecting the oxidation reaction and release of Al3 • and Fe3 ions that are responsible of the formation of basic salts or insoluble hydroxides that will separate from the liquid fraction. With this contribution a very remarkable improvement of the performance of the system is obtained, and resulting in a third liquid fraction much better purified than with the previously known methods.

According to a further embodiment of the proposed method, steps a) to c) are carried out continuously and are controlled automatically by a control centre with a computer means and a specific software which apart from supporting the management of the installation in continuous, sends different alarms in case of any anomaly in the equipment of the plant. These alarms can be transmitted through various means / communication systems to a remote point, for example by wiring, wireless signal (wifi, bluetooth). They can also be received on portable and / or remote devices, such as a mobile telephone receiver, for example.

In this way, control over the incidences of the slurry treatment process is available and, in addition, this procedure can be controlled by remote control from another terminal or, at least in part, from a mobile telephone. In the aforementioned control center these alarms are also received, as well as the values of level of a series of tanks of the treatment plant through which the aforementioned first and second liquid fractions are successively filtered, said control center also receiving the values of rotation regime of the aforementioned centrifuge equipment, which is proposed to be a centrifuge with screw. In particular, if said centrifuge is not at a predetermined rotation speed, the process of the different steps described in continuous is not started.

According to the proposed method, it is provided that said first liquid fraction integrates solid particles in suspension of a size smaller than 0.45 or 0.65 mm, and is obtained by filtering through a mesh in a filter separating equipment. of screw, which will operate under a flow with the particularity of providing a flow of effluent to treat greater than the treatment capacity. This excessive supply of liquid effluent will generate a return flow to a first deposit of effluent of all the liquid effluent supplied to the separating equipment and not filtered by overcome the treatment capacity of it. In said first effluent reservoir, an agitator will subject the stored liquid effluent to agitation to avoid its decanting.

As indicated above, it is further proposed that said second liquid fraction, resulting from the additional ultra-fine filtering step, contain an effluent with a suspended solids charge with a particle size of less than 20 microns.

From this it follows that the first stage of solid-liquid physical separation will remove particles larger than 0.45 or 0.65 mm in size, which will form the first solid fraction, and that the physical-chemical separation stage will eliminate particles of a size comprised between 20 microns and those cited 0.45 or 0.65 mm, which will make up the second ultra-fine solid fraction.

It is provided that said first liquid fraction is stored in a homogenization tank, where it is homogenized by means of liquid recirculation, and from which said first homogenized liquid fraction is pumped to a centrifuge filtration equipment, which will preferably be a device of centrifugation. In a particular example, said centrifuge equipment is a screw-type centrifuge. Said second liquid fraction is conducted, after its physical-chemical separation, to a regulation tank from where it is pumped to one or more electrocoagulation equipment. Said regulating tank has a level sensor, whose value is a priority in the chained maintenance of the different stages in a continuous manner. That is, the value communicated by said level sensor to the centre control is a priority parameter used in the determination of parameters of operation of other equipment in the treatment plant controlled by said control centre.

Additionally, it is proposed to provide a dosage and supply of an antifoam to the second liquid fraction upstream of said deposit regulation.

Each of said electrocoagulation equipment has sacrificial anodes that release AP ions or Fe ions <2 13 •>, performing a continuous treatment of an adjustable flow rate of the second liquid fraction to be treated. In addition, a regulation of the distance between anode and cathode of the heads of said equipment, which determines the maintenance of a current intensity of electrocoagulation at a constant and predetermined value defined from said control centre.

As for said step of pelletizing the solid fractions, it preferably comprises a treatment of the solids of said solid fractions in a rotating drum with heat input and with mixing said solid fractions with a crushed lignocellulose material, the proportion of material being lignocellulosic no greater than 50% of the final mixture. The minimum presence of lignin must be at least 10% dry matter of the total mixture. This can be achieved with a lower proportion of wood elements that have a higher lignin content.

In an embodiment, the proportions of solid fraction and lignocellulose material can be 50% I 50%, respectively.

The resulting mixed product after passage through the rotary drum has a maximum humidity of 20%, and is subsequently subjected to a compression-binder process, preferably by means of an extruder compressor.

Said compression agglutination process comprises the addition, to the product resulting from the mixing of solid and lignocellulose fraction, of glycerine and optionally also of starch.

The above-mentioned treatments have been proposed by the fact that the pig slurry itself would not agglutinate, i.e. the particles would not stick together. Providing a lignocellulose load, and subsequently glycerine and eventually starch, to the process, said agglutination is guaranteed.

Other features of the invention will appear in the following detailed description of an exemplary embodiment.

### Brief description of the figures

The above and other advantages and features will be more fully understood from the following detailed description of an exemplary embodiment with reference
to the attached drawings, which should be taken as illustrative and not limiting, in which:

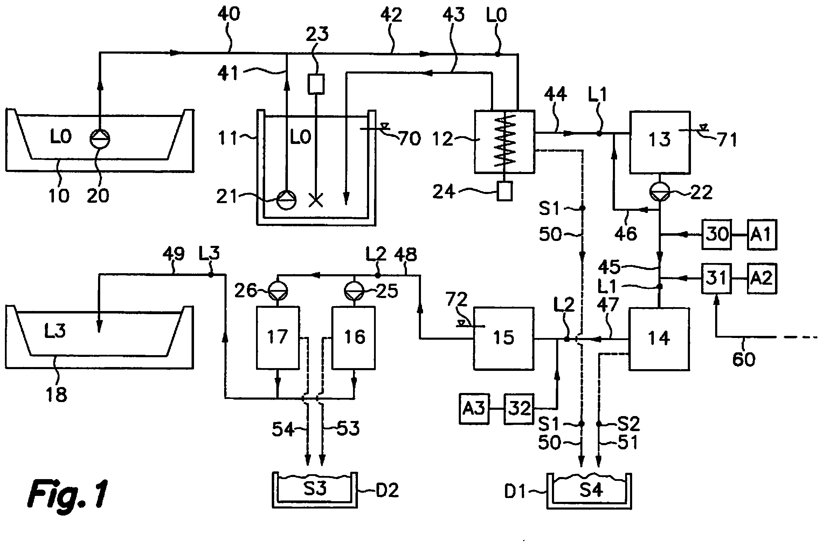

Fig. 1 shows a diagram of a pig slurry treatment plant that applies the procedure proposed by this invention. The figure shows the main equipment of the plant and, in a continuous line, the transport lines of the effluents to be treated that contain slurry that communicate said equipment, and in discontinuous line the pipes of the separated solid fractions of said effluents to be treated, without having included in the present scheme the data connections of said treatment plant to a control centre equipped with computing means and software for managing the plant to guarantee operation continuous operation, nor the part of the plant responsible for producing the procedure of agglutination by compression of the solid fraction;

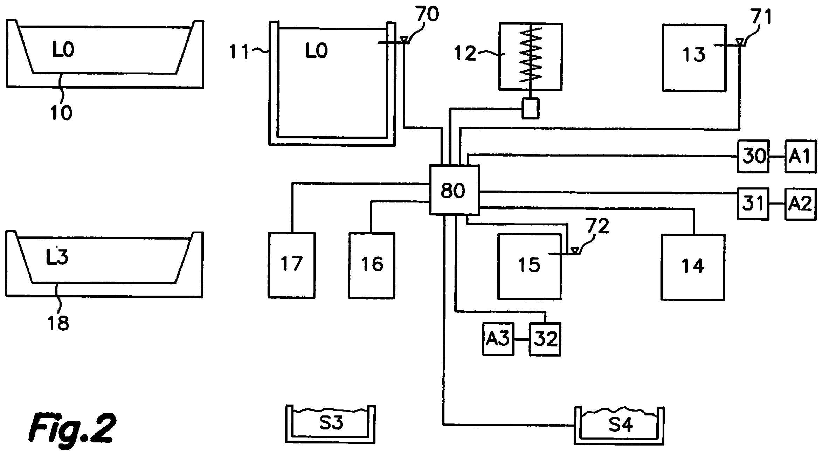

Fig. 2 shows the same diagram as Fig. 1, in which the main equipment of the plant is shown, and the data connections of said equipment with a control centre, without having included in the present scheme the conduits transport of liquids to be treated or of separate solid fraction conduits of said liquids;

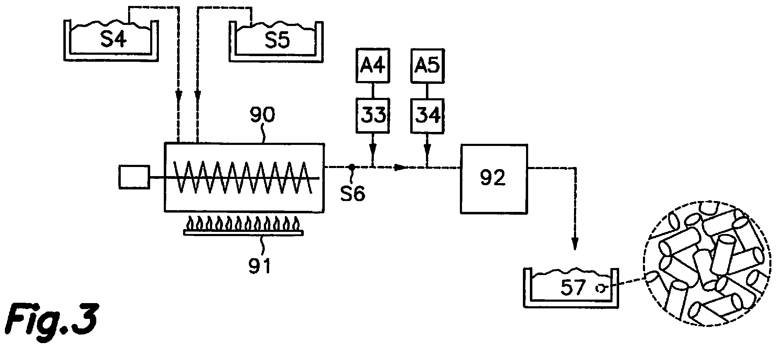

Fig. 3 illustrates a diagram of the portion of the plant responsible for producing the process of agglutination by compression of the solid fraction and preparation of pellets or combustible biomass, from the solid fraction separated from the liquid treated in the plant shown in Fig. 1 and 2, showing in broken line the path of the solid fraction treated.

### Detailed description of a realization example:

Fig. 1 shows, according to an exemplary embodiment with non-limiting illustrative character, a schematic of the treatment plant of LO effluents containing slurry, separating solid fractions S1, S2 and S3 (S4 meeting of S1 and S2) usable of a first L1 and second L2 liquid fractions, and collecting a final liquid fraction L3 susceptible of use for irrigation, in a reception raft 18.

The proposed plant comprises:
- a 1O effluent pond containing slurry, destined to store liquid effluents containing slurry;
- a supply conduit 40 for supplying liquid effluents LO from the effluent basin 1O to a first effluent reservoir 11, which is conducted via a feed pump 20;
- a first effluent tank 11, intended to store the liquid effluent LO supplied through said first line 40, said first effluent tank 11 having an agitator 23, and connected by a first line 41 that allows the supply of the contents of the first deposit of effluents 11 to the second line 42 by means of a first pump 21;
- a screw filter separating device 12, fed through said second line 42 with a flow rate of liquid effluent LO with a flow to be treated higher than the treatment capacity of said screw filter 12, which has a motor screw 24 that activates the rotation of the screw of the separating device 12;
- a third pipe 43 that returns the flow of liquid effluent LO supercharged to the separating equipment 12 and not treated by it, to the tank 11;
- a fourth line 44 leading a first liquid fraction L1, obtained from the solid-liquid physical separation produced in the separating equipment 12 to a tank 13 or homogenization tank;
- a first conveyor 50 carrying a first solid fraction S1, obtained from the solid-liquid physical separation • • produced in the separating equipment 12 to a solid collection tank 01;
- a homogenization tank 13 for liquid recirculation, fed through said fourth line 44 with the first liquid fraction L1;
- a fifth conduit 45 carrying said first liquid fraction L1 after having been homogenized in the homogenization tank 13, driven by a

second pump 22 to centrifuge equipment 14;
- a sixth bypass conduit 46 communicating the fifth conduit 45 with the fourth conduit 44;
- a coagulant dispenser 30 that introduces a controlled contribution of coagulant A 1 to said first liquid fraction L1 conducted through said fifth driving 45;
- un dosificador de floculante 31 que introduce un aporte controlado de floculante A2 mezclado con un aporte controlado de agua de red, suministrada a través de una conducción de agua de 60, a dicha primera fracción líquida L1 conducida a través de dicha quinta conducción 45
- a screw spinning equipment 14 fed through said fifth pipe 45 which provides, together with the coagulant and the flocculant, a physical-chemical separation of the first liquid fraction L1 providing a second ultra-fine filtering, resulting in a second liquid fraction L2 with a particle size of less than 20 microns, and a second solid fraction 52 ultra-fine;
- a seventh conduit 47 that leads said second liquid fraction L2 towards a regulation tank 15;
- a second conveyor 51 carrying a second solid fraction 52, coming from the spinning equipment 14 of a worm screw, which is mixed with the first solid fraction 51 producing a fourth solid fraction 54 which accumulates in the solid collection tank D1;
- an antifoam dispenser 32 that introduces a controlled antifoam contribution A3 to said second liquid fraction L2 conducted through said seventh conduit 47;
- a regulating tank 15 fed with said second liquid fraction L2 through said seventh conduit 46;
- an eighth pipe 48 that leads said second liquid fraction L2 towards one or more electrocoagulation equipment 16, 17;
- one or more electrocoagulation equipment (which may be as described in Patent ES 2292310 (81)), in the present example a first and a second electrocoagulation equipment 16 and 17, which are fed with said second liquid fraction L2 through said eighth conduit 48, by third and fourth pumps 25 and 26 , wherein said electrocoagulation equipment 16 and 17 include sacrificial anodes that release AI3 or Fe (2 13 •> ions, performing a continuous treatment of an adjustable flow rate of the second liquid fraction L2 to be treated, and which further allow a regulation of the distance between anode and cathode determining a maintenance of the intensity of the electrocoagulation current at a constant and predetermined value; these teams of Electrocoagulation 16 and 17 provide a third purified liquid fraction L3 and a third solid fraction 53 result of the basic salts or insoluble hydroxides formed in the solution by the liberation of the metal ions, insoluble compounds that precipitate in the form of flocs and that absorb an important part of organic substances that exist in the solution decontaminating the resulting water or liquid fraction L3, cited;
- a ninth line 49 collects the aforementioned third liquid fraction L3 produced in electrocoagulation equipment 16 and 17 and leads it to a receiving raft 18;
- one or several transporters, in this example a third and a fourth conveyors 53 and 54, collect said third solid fraction 53 produced in electrocoagulation equipment 16 and 17;
- a receiving raft 18 is fed with the third liquid fraction L3 through said eighth line 48.

In order to achieve a correct regulation of the different equipment comprising the proposed treatment plant, a control centre 80 with computing means (including at least one computer) is included, as shown in FIG. 2. where the values of different sensors integrated in the plant are received including a first level sensor 70 located in the first effluent tank 11, a second level sensor 71 located in the tank of homogenization 13, and a third 72 level sensor located in the regulation tank 15, to which are transported the mentioned first and second liquid fractions L1 and L2 successively filtered, said computer also receiving the values of rotation rate of said spinning equipment (14) screw.

All these data obtained by the control centre 80 allow knowing the operating parameters of the plant, and allow said control centre 80 to take, by means of control algorithms included in said specific software, decisions to modify the operating parameters of the plant. Preferably, the control centre 80 will implement said modifications of operating parameters through automatic actuators controlled by said control centre 80, such as, for example, solenoid valves, pumps, or modifying the performance parameters of said pumps, the dosing devices coagulant 30, flocculants 31 or antifoam, electrocoagulation equipment, etc.

Figure 3 shows, schematically, the treatment given to said fourth solid fraction 84 and solid fraction 83 in order to achieve its use by its conversion into pellets 57 usable as fuel.

In a first stage, said solid fraction (83 + 84) is mixed with a crushed lignocellulose material 85 in an example of execution, in equal parts, and both materials are introduced in a rotary drum 90 with heat input 91, where they are mixed and mixed. The resulting product is a dry solid product 86 which is extracted from said rotating drum, and to which a controlled supply of glycerin A4 is added, by means of a glycerin dispenser 33, and a controlled addition of starch A5 is added by means of a starch dispenser 34. Next said dry solid product 86 with glycerin A4 and starch A5 is subjected to a binding process by compression, by means of an extruder compressor 92, which converts said product into some pellets 57 suitable as fuel biomass.

As it will be apparent, the equipment shown in Figure 3 may also be connected and controlled by the control centre 80 shown in Figure 2.

## Claims

1. Procedure for treatment of slurry, in particular porcine slurry, which comprises the following stages:
a) solid-liquid physical separation of a liquid effluent (LO) containing slurry, generated a first solid fraction (S1) and a first liquid fraction (L1) filtered;
b) physical-chemical separation of the first liquid fraction (L1) obtained in step a) providing a second solid fraction (S2) and a second liquid fraction (L2);
c) electrocoagulation of the second liquid fraction (L2) obtained in step b) providing a third solid fraction (S3) and a third liquid fraction (L3); Y
characterized because
• step b) of physical-chemical separation comprises:
• controlled dosing and delivery of a coagulant (A1) to said first liquid fraction (L1);
• controlled dosage and supply of a flocculant (A2), in aqueous dispersion to said first liquid fraction (L1), downstream of the coagulant supply point (A1); and
• treatment of said first liquid fraction (L1), dosed with coagulant (A1) and flocculant (A2), in a device that provides a second liquid fraction (L2) performing a second ultra-fine filtering by separating an ultra-fine solid fraction (S2), so that said second liquid fraction L2 has a particle size much lower than that of the particles of the liquid fraction L1.

2. Method according to claim 1, **characterized in that** said second ultra-fine filtering is performed by means of a centrifuge equipment (14).

3. Method according to claim 2, **characterized in that** said centrifuge equipment is a spinning screw equipment.

4. Method according to any of the preceding claims, **characterized in that** steps a) to c) are performed continuously, and are automatically controlled by a control center (80) with computing means with the less a computer and a specific associated software, where the level values of a series of deposits (11, 13, 15) are received through which they are conveyed said first and second liquid fractions (L1 and L2) successively filtered, computer also receiving the rotation speed values of said centrifuge unit (14) of endless screw.

5. Method according to claim 1, **characterized in that** said first liquid fraction (L1) comprises a size of solid particles in minor suspension to 0.45 or 0.65 mm, and is obtained by filtering through a mesh in a separating equipment (12) of a screw filter operating at a flow rate with a flow of effluent (LO) to be treated above the treatment capacity and providing for a return flow to a first effluent tank (11) where it is subjected to agitation.

6. Method according to any one of claims 1 to 3, characterized because said second liquid fraction (L2) comprises a particle size of less than 20 microns.

7. Method according to any one of claims 1 to 3, **characterized in that** said first liquid fraction (L1) is stored in a homogenization tank (13), by recirculation of liquid, from where it is pumped to the spinning equipment (14) of endless screw.

8. Method according to claim 4, **characterized in that** said second liquid fraction (L2) is conveyed to a regulating tank (15) from where it is pumped to one or more electrocoagulation equipment (16, 17), and because said tank regulation (15) has a level (72), whose value is a priority in the chained maintenance of the different stages continuously.

9. Method according to claim 8, **characterized in that** it comprises a dosage and supply of an antifoam (A3) to the second liquid fraction (L2) upstream of said regulation tank (15).

10. Method according to claim 2 or 3, **characterized in that** said Electrocoagulation is performed in electrocoagulation equipment (16, 17) in presence of sacrificial anodes that release ions Al3 • or Fe <2 13 •>, performing a continuous treatment of an adjustable flow rate of the second liquid fraction (L2) to be treated and with a regulation of the distance between anode and cathode determinant of a maintenance of the current intensity of electrocoagulation at a constant and predetermined value defined from said centre control (80).

11. Method according to any one of claims 1 to 3, **characterized in that** said pelletizing step comprises a treatment of the solids of said solid fractions (51, 52 and 54) in a rotating drum (90) with heat input (91).) and with a proportion of lignocellulose material (SS) not greater than 50% of the final mixture with said solid fractions producing a resulting mixed product with a maximum humidity of 20%, which is subsequently subjected to a compression-binder process.

12. Method according to claim 11, **characterized in that** said material lignocellulose is crushed with a predetermined particle size.

13. Process according to claim 11, **characterized in that** said compression agglutination process comprises the addition, to the product resulting from the mixing of solid fraction (51, S2 and 54) and lignocellulosic (SS), of glycerine (A4).

14. Process according to claim 13, **characterized in that** it is used in addition, an amount of starch (AS) as a binder.

15. Plant for the treatment of slurry, in particular porcine slurry, **characterized in that** it comprises:
• a first effluent tank (11), intended to store a liquid effluent LO containing slurry, supplied through a first conduit (40), said first effluent reservoir (11) being provided with an agitator (23), and connected to a first pipe (41) that allows the contents of said tank (11) to be supplied to a second pipe 42 by means of a first pump 21;
• a separating device (12) of screw filter, fed through said second line (42) with a flow of liquid effluent LO with a flow to be treated higher than the treatment capacity of said screw filter (12) and with a third line (43) that returns the flow of liquid effluent LO supercharged to the equipment separator (12) and not treated by it, to the tank (11);
• a homogenization tank (13) receiving said first liquid fraction L1;
• a fifth conduit (45) leading said first liquid fraction L1 after having been homogenized in the homogenization tank (13), driven by a second pump (22) to an equipment that performs a second ultra-fine filtering:
• a coagulant dispenser (30) that introduces a controlled contribution of coagulant A 1 to said first liquid fraction L1 conducted through said fifth conduit (45);
• a flocculant dispenser (31) which introduces a controlled contribution of flocculant A2 mixed with a controlled supply of mains water, supplied through a water conduit (60), to said first liquid fraction L1 conducted through said fifth conduit (45);
• an auger spinning equipment (14) fed through said fifth pipe (45) which provides, together with the coagulant and the flocculant, a physical-chemical separation of the first liquid fraction L1 providing said second ultra-fine filtration, resulting in a second liquid fraction L2 with a particle size of less than 20 microns, and a second ultra-fine solid fraction 52, which they are fed to an electrocoagulation device (16, 17), and • a control center (80) with computing means with at least one computer and associated specific software, where the level values of said series of deposits (11, 13) are received through which said vehicles are transported first and second liquid fractions (L1 and L2) successively filtered, said computer also receiving the rotation speed values of said spinning screw (14).

16. Plant according to claim 15, **characterized in that** it also comprises a seventh pipe (47) that leads said second liquid fraction L2 to a regulating tank (15), sandwiched between the spinning equipment (14) of screw auger and the electrocoagulation equipment (16, 17), an antifoam dispenser (32) being provided which introduces a controlled antifoam contribution A3 to said second liquid fraction L2 conducted through said seventh conduit (47).

17. Plant according to claim 15, **characterized in that** said electrocoagulation equipment (16 and 17) includes sacrificial anodes that release ions AP or Fe (2 • •>, performing a continuous treatment of an adjustable flow of the second liquid fraction L2 to be treated, and which also allow a regulation of the distance between anode and cathode determining a maintenance of the intensity of the electrocoagulation current at a constant and predetermined value, these electrocoagulation equipment (16 and 17) providing a third fraction liquid L3 purified and a third solid fraction 53.

18. Plant according to one of claims 15 to 17, **characterized in that** one or several conveyors collect the solid fractions produced in the separation equipment (12), centrifugation equipment (14), and electrocoagulation equipment (16, 17), to some deposits (01, 02).

19. Plant according to any one of claims 15 to 18, **characterized in that** it comprises a rotating drum (90) with heat input (91), where they are mixed and drying the solid products (51, 52, 53 and 54) with ground lignocellulosic materials (55), and **in that** it further comprises an extruder compressor (92) in which said solid products (51, 52, 53 and 54) are agglomerated by compression.

20. Plant according to claim 19, **characterized in that** it comprises means for a controlled supply of glycerine A4, by means of a glycerine dispenser (33), and optionally for an additional controlled supply of starch AS by a starch dispenser (34) in a supply line for said solid products (51, 52, 53 and 54), to the extruder compressor (92) which provides pellets useful as fuel biomass.
